# EUROPÄISCHE PATENTSCHRIFT

(11) **EP 3 601 959 B1**
(45) Veröffentlichungstag und Bekanntmachung des Hinweises auf die Patenterteilung: **12.01.2022**
(21) Anmeldenummer: 18714150.2
(22) Anmeldetag: 12.03.2018
(51) Int. Cl.: G01D 11/30, F16B 2/06

(54) **FELDGERÄT DER AUTOMATISIERUNGSTECHNIK**
AUTOMATION FIELD DEVICE
APPAREIL DE TERRAIN DE TECHNOLOGIE D'AUTOMATISATION

(30) Priorität: 28.03.2017 DE 202017101790 U
(43) Veröffentlichungstag der Anmeldung: 05.02.2020
(73) Patentinhaber: Endress+Hauser SE+Co. KG, 79689 Maulburg (DE)
(72) Erfinder: LAIS, Michael, 79677 Wembach (DE); SCHONHARDT, Raphael, 79618 Rheinfelden (DE)
(74) Vertreter: Andres, Angelika Maria
(86) Internationale Anmeldenummer: PCT/EP2018/056005
(87) Internationale Veröffentlichungsnummer: WO 2018/177725

(56) Entgegenhaltungen:
- WO-A1-2017/009600
- DE-A1- 19 532 330
- FR-A1- 2 749 384
- US-A- 2 917 267

## Beschreibung

Die Erfindung betrifft ein Feldgerät der Automatisierungstechnik mit einem Gehäuse, aufweisend eine kanalförmige Führung zur Aufnahme einer für eine Prozessgröße eines Mediums sensitiven Sensoreinheit des Feldgeräts, wobei die Sensoreinheit durch eine endseitige Öffnung der Führung aus dem Gehäuse heraus ragt.

In der Automatisierungstechnik werden Feldgeräte zur Bestimmung und/oder Überwachung von Prozessgrößen, insbesondere von physikalischen oder chemischen Prozessgrößen, eingesetzt. Als Feldgeräte werden im Rahmen der vorliegenden Anmeldung im Prinzip alle Messgeräte bezeichnet, die prozessnah eingesetzt werden und die prozessrelevante Informationen liefern oder verarbeiten. Ein Feldgerät umfasst typischerweise zumindest eine zumindest teilweise und zumindest zeitweise mit dem Prozess in Berührung kommende Sensoreinheit. Dabei handelt es sich beispielsweise um Füllstandsmessgeräte, Durchflussmessgeräte, Druck- und Temperaturmessgeräte, pH-Redoxpotentialmessgeräte, Leitfähigkeitsmessgeräte, usw., welche die entsprechenden Prozessgrößen Füllstand, Durchfluss, Druck, Temperatur, pH-Wert bzw. Leitfähigkeit erfassen. Derartige Feldgeräte werden in unterschiedlichen Ausgestaltungen von der E+H Gruppe hergestellt und vertrieben.

Bei einer Vielzahl dieser Feldgeräte wird die Sensoreinheit in eine kanalförmige Führung des Gehäuses zur Aufnahme der Sensoreinheit eingebracht. Dabei ragt ein Teil der Sensoreinheit aus einer Öffnung der kanalförmigen Führung aus dem Gehäuse heraus, so dass ein Teil der Sensoreinheit mit dem Prozess, insbesondere mit einem Prozessmedium, in Berührung steht. Insbesondere ist die Sensoreinheit in die kanalförmige Führung geschraubt oder gesteckt.

Oftmals liegt der Wunsch vor, die in die Führung eingebrachte Sensoreinheit in Bezug zu dem Gehäuse flexibel orientieren zu können, da z.B. aufgrund von Einschränkungen an den zu Verfügung stehenden Platz am Einsatzort nur bestimmte Orientierungen des Feldgeräts möglich sind. In dem Gehäuse ist dabei auch eine Elektronikeinheit angeordnet, die beispielsweise der Erzeugung, Verarbeitung bzw. Umwandlung und/oder Weiterleitung von elektrischen oder elektronischen Signalen dient. Hierbei ist es wünschenswert, dass ein bestimmter Bereich der Elektronikeinheit von einer bestimmten Richtung her zugänglich ist. Dies gilt beispielsweise für einen als Anschlusseinheit ausgeführten Teil der Elektronikeinheit, der z.B. in einem Anschlussraum untergebracht ist, welcher für Anschlussarbeiten zugänglich sein sollte.

Besonders vorteilhaft ist es, wenn die flexible Orientierung mittels eines Befestigungsmittels arretiert und/oder gelöst werden kann. Im Stand der Technik wird hierzu beispielsweise eine in das Gehäuse eingebrachte und von einer Gehäusewand her zugängliche Schraube eingesetzt, welche in einem Befestigungsbereich auf die Sensoreinheit presst. Aufgrund der zur Befestigung erforderlichen Zugfestigkeiten, müssen hierfür Schrauben einer gewisse Gewindegröße eingesetzt werden, z.B. M6-Schrauben oder größer. In WO2017/009600 ist ein solches Feldgerät gezeigt, bei dem eine Sensoreinheit mittels einer Schraube am Gehäuse befestigt ist. DE19532330 und FR2749384 zeigen weitere bekannte Klemmvorrichtungen zum Befestigen eines Sensors.

Die Verwendung eines derartigen Befestigungsmittels mit einer ausreichend hohen Zugfestigkeit (d.h. einer Schraube einer gewissen Größe) ist allerdings dann ausgeschlossen, wenn der zur Verfügung stehende Befestigungsbereich sehr einschränkt ist. Dies ist zum Beispiel der Fall, wenn das Gehäuse selbst sehr kurz ausgeführt ist.

Zusätzlich ist oftmals ein Dichtelement vorgesehen, welches das Gehäuse und die Sensoreinheit im Bereich der Öffnung der Führung flüssigkeitsdicht gegeneinander abdichtet. Dadurch werden die in dem Gehäuse untergebrachten elektronischen Komponenten der oben erwähnten Elektronikeinheit vor Einflüssen der Umgebung und/oder des Prozesses, insbesondere des Prozessmediums geschützt. Der Befestigungsbereich sollte hierbei möglichst zwischen dem Dichtelement und der Öffnung der Führung angeordnet sein. Da die Anordnung des Dichtelements aufgrund von sicherheitsrelevanten Überlegungen oftmals vorgegeben ist, ergeben sich hierdurch zusätzliche Einschränkungen an den für den Befestigungsbereich zur Verfügung stehenden Platz.

Der Erfindung liegt daher die Aufgabe zugrunde, eine platzsparende Lösung bereitzustellen, um die Sensoreinheit und das Gehäuse eines Feldgeräts der Automatisierungstechnik ausreichend fest gegeneinander zu fixieren.

Die Aufgabe wird gelöst durch ein Feldgerät der Automatisierungstechnik mit einem Gehäuse und einer Sensoreinheit gemäß Anspruch 1. Das Gehäuse weist eine kanalförmige Führung zur Aufnahme einer für eine Prozessgröße eines Mediums sensitiven Sensoreinheit des Feldgeräts, wobei die Sensoreinheit durch eine endseitige Öffnung der Führung aus dem Gehäuse heraus ragt, wobei in einem an die Öffnung der Führung angrenzenden Bereich des Gehäuses ein Klemmwinkel und eine Schraube in das Gehäuse eingebracht sind. Mittels der Schraube ist der Klemmwinkel im Gehäuse um einen vorgebbaren Versatz in Richtung der Sensoreinheit verschiebbar, wobei der in Richtung der Sensoreinheit verschobene Klemmwinkel dazu ausgestaltet ist, mit einem ersten Klemmwinkelabschnitt des Klemmwinkels im Wesentlichen radial auf einen im Gehäuse angeordneten und der Öffnung der Führung zugewandten Klemmbereich der Sensoreinheit zu pressen.

Der mittels der Schraube in dem Gehäuse verschobene und auf den Klemmbereich der Sensoreinheit im Wesentlichen radial pressende Klemmwinkel arretiert das Gehäuse und die Sensoreinheit gegeneinander. Über den Klemmwinkel wird dabei die von der Schraube ausgehende Anpresskraft umgeleitet, wobei der als Klemmbereich ausgebildete Befestigungsbereich im Vergleich zur Schraube sehr knapp ausgeführt werden kann. Dies liegt daran, dass in einer zur Sensoreinheit axialen Richtung, insbesondere in Längsrichtung der kanalförmigen Führung, der auf den Klemmbereich radial pressende erste Klemmwinkelabschnitt wesentlich weniger Platz beansprucht. Dabei kann der erste Klemmwinkelabschnitt in seiner Form gegebenenfalls so ausgelegt sein, dass der zur Verfügung stehende Platz optimal ausgenutzt wird. Dadurch wird durch die erfindungsgemäße Lösung eine ausreichend feste Arretierung erreicht, auch bei geringem zur Verfügung stehenden Platz.

In einer Ausgestaltung der Erfindung ist die Sensoreinheit in das Gehäuse eingeschraubt oder eingesteckt. Der auf die Sensoreinheit pressende, erste Klemmwinkelabschnitt verhindert eine Verdrehung der in das Gehäuse eingeschraubten oder eingesteckten Sensoreinheit gegenüber dem Gehäuse. In einer Weiterbildung der Erfindung ist der erste Klemmwinkelabschnitt im Wesentlichen parallel, insbesondere frontbündig, zu einer an die Öffnung der Führung angrenzenden ersten Gehäusewand angeordnet. Der erste Klemmwinkelabschnitt presst mit einer Kontur des ersten Klemmwinkelabschnitts auf den Klemmbereich der Sensoreinheit.

In einer bevorzugten Ausgestaltung dieser Weitebildung ist die Form der Kontur des ersten Klemmwinkelabschnitts an die Form des Klemmbereichs der Sensoreinheit angepasst ist. Handelt es sich beispielsweise um eine im Klemmbereich im Wesentlichen zylinderförmige Sensoreinheit, so weist die Kontur des ersten Klemmwinkelabschnitts eine Krümmung auf, die an den Radius der im Klemmbereich im Wesentlichen zylinderförmigen Sensoreinheit angepasst ist. Mittels der auf den Klemmbereich der Sensoreinheit pressenden Kontur des Klemmwinkelabschnitts wird eine Fixierung erreicht, bei der eine Kraftübertragung von der Kontur auf den Klemmbereich an mehreren Stellen der Kontur stattfinden kann. Auch dies ist ein Vorteil gegenüber der aus dem Stand der Technik bekannten Fixierung mit einer Schraube, bei der die Kraftübertragung im Wesentlichen nur an einem Punkt bzw. punktuell stattfindet.

In einer Ausgestaltung der Erfindung ist in einem an die Öffnung der Führung angrenzenden Bereich ein Dichtelement zwischen Sensoreinheit und Gehäuses angeordnet ist, das dazu ausgestaltet ist, die Sensoreinheit gegenüber dem Gehäuse abzudichten. Der Klemmbereich ist zwischen dem Dichtelement und einem aus der Öffnung der Führung heraus ragenden Bereich der Sensoreinheit angeordnet.

Gemäß der Erfindung ist der Klemmwinkel in eine Aussparung des Gehäuses eingesetzt. Eine ein Herausnehmen und/oder ein Herausfallen des Klemmwinkels aus der Aussparung verhindernde erste Verliersicherung ist dadurch gebildet, dass in einen zu dem ersten Klemmwinkelabschnitt im Wesentlichen senkrechten, zweiten Klemmwinkelabschnitt ein stiftförmiges Element eingesetzt ist, welches durch den zweiten Klemmwinkelabschnitt hindurch ragt. Der erste und der zweite Klemmwinkelabschnitt sind also durch zwei zueinander im Wesentlichen senkrechte, ebene Abschnitte des Klemmwinkel gebildet.

Dabei wird zunächst der Klemmwinkel in die Ausparung des Gehäuses, und anschließend das stiftförmige Element in den zweiten Klemmwinkelabschnitt eingesetzt. Dadurch, dass das stiftförmige Element durch den zweiten Klemmwinkelabschnitt hindurch ragt, kann der Klemmwinkel mit dem darin eingesetzten stiftförmigen Element nicht mehr dem Gehäuse entnommen werden.

In einer bevorzugten Ausgestaltung dieser Weiterbildung ist das stiftförmige Element der ersten Verliersicherung durch die Schraube gebildet, die durch eine in den zweiten Klemmwinkelabschnitt eingebrachte Bohrung hindurch ragt.

Selbstverständlich ist es alternativ auch möglich, ein separates stiftförmiges Element vorzusehen, welches nur der ersten Verliersicherung dient. In diesem Fall muss die Schraube nicht durch eine in den zweiten Klemmwinkelabschnitt eingebrachte Bohrung hindurchragen, sondern ist dazu ausgestaltet, den Klemmwinkel dadurch zu verschieben, dass die Schraube gegen den ebenen, zweiten Klemmwinkelabschnitt presst.

In einer besonders bevorzugten Weiterbildung der Erfindung wird eine ein Herausnehmen und/oder ein Herausfallen der Schraube aus dem Klemmwinkel verhindernde zweite Verliersicherung dadurch gebildet, dass die Schraube an einem durch die Bohrung hindurch ragenden Endbereich einen größeren Durchmesser als die Bohrung aufweist. In dieser Ausgestaltung ist also die die erste Verliersicherung (nämlich für den Klemmwinkel) bildende Schraube selbst vor einem Herausnehmen und/oder dem Herausfallen mittels der zweiten Verliersicherung gesichert. Dies wird dadurch erreicht, dass der Durchmesser der Schraube an dem Endbereich, mit welchem sie durch den zweiten Klemmwinkelabschnitt ragt, einen größeren Durchmesser als die Bohrung aufweist. Dadurch ist die durch die Bohrung des zweiten Klemmwinkelabschnitts ragende Schraube nicht ohne weiteres dem zweiten Klemmwinkelabschnitt entnehmbar. Damit die Schraube in die Bohrung des zweiten Klemmwinkelabschnitts einschraubbar ist, ist es vorteilhaft, wenn ein Federelement vorgesehen ist, welches beim erstmaligen Einschrauben der Schraube in die Bohrung eine Anpassung des Durchmesser des Endbereichs der Schraube und des Durchmessers der Bohrung aneinander bewirkt.

In einer ersten Ausgestaltung dieser Weiterbildung ist daher in den zweiten Klemmwinkelabschnitt ein Schlitz eingebracht. Die Schraube ist dadurch in die Bohrung des zweiten Klemmwinkelabschnitts einschraubbar, dass das Einschrauben der Schraube mittels des Schlitzes ein Auffedern der Bohrung bewirkt.

In einer zweiten Ausgestaltung dieser Weiterbildung wird der größere Durchmesser der Schraube in dem Endbereich durch einen auf die Schraube aufgesetzten und geschlitzten Ring bestimmt. Die Schraube ist dadurch in die Bohrung des zweiten Klemmwinkelabschnitts einschraubbar, dass das Einschrauben der Schraube ein Zusammenfedern des geschlitzten Rings bewirkt.

In einer Ausgestaltung der Erfindung ist die Schraube von einer zu der ersten Gehäusewand im Wesentlichen parallelen zweiten Gehäusewand her zugänglich. Die zweite Gehäusewand ist zu dem zweiten Klemmwinkelabschnitt im Wesentlichen parallel. Das Zuschrauben der Schraube bewirkt das Verschieben des Klemmwinkels um den vorgebbaren Versatz zu der Sensoreinheit hin, und das Aufschrauben der Schraube bewirkt das Verschieben des Klemmwinkels um den vorgebbaren Versatz von der Sensoreinheit weg.

In einer weiteren Ausgestaltung der Erfindung ist in das Gehäuse ein Kanal, zur Aufnahme der Schraube gebohrt, insbesondere im Wesentlichen radial zur Sensoreinheit.

In einer Ausgestaltung der Erfindung ist die Aussparung zur Aufnahme des Klemmwinkel bei der Fertigung des Gehäuses, insbesondere in einem Urformen, hergestellt.

In einer Ausgestaltung der Erfindung ist bzw. sind die Schraube und/oder der Klemmwinkel aus einem Edelstahl gefertigt.

In einer Ausgestaltung der Erfindung weist die Schraube einen Durchmesser von 1mm bis 10 mm, insbesondere von 2mm bis 6mm, auf.

In einer Ausgestaltung weist der erste Klemmwinkelabschnitt eine kleinere Fläche als der zweite Klemmwinkelabschnitt auf. Insbesondere weist der zweite Klemmwinkelabschnitt eine Fläche 10mm² bis 200 mm² auf.

Die Erfindung wird anhand der nachfolgenden, nicht maßstabsgetreuen Figuren näher erläutert, wobei gleiche Bezugszeichen gleiche Merkmale bezeichnen. Wenn es die Übersichtlichkeit erfordert oder es anderweitig sinnvoll erscheint, wird auf bereits erwähnte Bezugszeichen in nachfolgenden Figuren verzichtet. Es zeigt:
Fig. 1: Eine Schnittansicht einer Ausgestaltung eines erfindungsgemäßen Feldgeräts;
Fig. 2a: Eine weitere Schnittansicht einer Ausgestaltung eines erfindungsgemäßen Feldgeräts;
Fig. 2b: Eine perspektivische Ansicht einer Klemmwinkels und einer Schrauben einer Ausgestaltung eines erfindungsgemäßen Feldgeräts;
Fig. 3a,b: Eine weitere Ausgestaltung eines erfindungsgemäßen Feldgeräts mit einem geschlitzten Ring;
Fig. 4: Eine weitere alternative Ausgestaltung eines erfindungsgemäßen Feldgeräts; und
Fig. 5: Eine perspektivische Ansicht einer weiteren Ausgestaltung eines erfindungsgemäßen Feldgeräts.

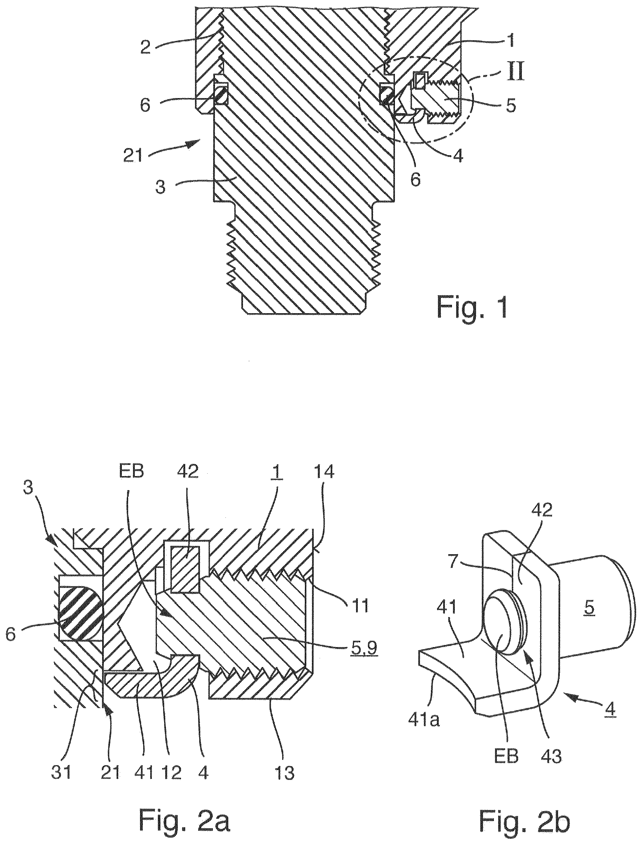

Die Schnittansicht in Fig. 1 einer Ausgestaltung eines erfindungsgemäßen Feldgeräts mit einem Gehäuse 1 zeigt die in eine kanalförmige Führung 2 eingebrachte Sensoreinheit 3, welche durch eine endseitige Öffnung 21 der Führung 2 aus dem Gehäuse heraus ragt. In dieser Ausgestaltung ist die Sensoreinheit 3 im Wesentlichen zylinderförmig. Selbstverständlich kann die Sensoreinheit 3 andere Ausgestaltungen als in der schematischen Darstellung in Fig. 1 aufweisen, um entsprechende sensitive Komponenten für die eingangs genannten Messgeräte zu umfassen. Darunter fallen beispielsweise mechanische schwingfähige Einheiten wie etwa Schwinggabeln, Membranschwinger oder Einstäbe im Fall von vibronischen Füllstandsmessgeräten.

In einem Bereich, der an die Öffnung 21 der Führung 2 angrenzt, ist zudem ein als ein Dichtelement 6 dienender und um die Sensoreinheit 3 ringförmig verlaufender Dichtring angeordnet, welcher das Gehäuse 1 und die Sensoreinheit 3 flüssigkeitsdicht gegeneinander abdichtet. Dadurch ist der zur Verfügung stehende Platz für eine Befestigung der Sensoreinheit 3 gegenüber dem Gehäuse 1 stark eingeschränkt. In der erfindungsgemäßen Lösung ist daher der Klemmwinkel 4 und die Schraube 5 zur Befestigung der Sensoreinheit 3 vorgesehen. Mittels der Schraube 5 kann der Klemmwinkel 4 gegen die Sensoreinheit 3 gepresst werden, so dass insbesondere eine Verdrehung des Gehäuses 1 gegenüber der Sensoreinheit 3 nicht mehr möglich ist. Der Klemmwinkel 4 ist dabei in eine Aussparung 12 des Gehäuses 1 eingesetzt.

Die detaillierte Schnittansicht in Fig. 2a zeigt die schon in Fig. 1 gezeigte Ausgestaltung des erfindungsgemäßen Feldgeräts mit dem Gehäuse 1, wobei in Fig. 2a im Wesentlichen nur das in Fig.1 markierte Detail II näher dargestellt ist. Der Klemmwinkel 4 presst mit einem ersten Klemmwinkelabschnitt 41 radial auf einen Klemmbereich 31 der Sensoreinheit 3, welcher zwischen dem Dichtring und der endseitigen Öffnung 21 angeordnet ist. Dabei ist der Klemmwinkel derart in die Aussparung 12 eingesetzt, dass der ebene, erste Klemmwinkelabschnitt 41 im Wesentlichen parallel zu einer ersten Gehäusewand 13 und insbesondere frontbündig zu der Gehäusewand 13 angeordnet ist. Der Klemmwinkel 4 ist dabei mittels der Schraube 5 um einen vorgebbaren Versatz in Richtung der Sensoreinheit 3 d.h. radial zur Sensoreinheit 3 verschiebbar (siehe angedeuteter Pfeil in Fig. 2a). Ein Zuschrauben der Schraube bewirkt, dass eine Kontur 41a des ersten Klemmwinkelabschnitts 41 radial zur Sensoreinheit 3 bewegt wird und auf den Klemmbereich 31 der Sensoreinheit 3 presst.

Eine erste Verliersicherung für den Klemmwinkel 4 ist dadurch gebildet, dass die Schraube 5 in eine Bohrung 43 (siehe Fig. 2b) im zweiten Klemmwinkelabschnitt 42 eingreift und als ein stiftförmiges Element 9 durch die Bohrung 42 des zweiten Klemmwinkelabschnitts 42 hindurch ragt. Dadurch wird verhindert, dass der Klemmwinkel 4 aus der Aussparung 12 entnommen werden kann.

Gleichzeitig ist die Schraube 5 nach einem erstmaligen Einschrauben in die Bohrung 43 durch eine zweite Verliersicherung in dem zweiten Klemmwinkelabschnitt 42 sicher gehalten. Die zweite Verliersicherung ist dadurch gebildet, dass die Schraube 5 in dem durch die Bohrung 43 hindurch ragenden, d.h. der Sensoreinheit 3 zugewandten, Endbereich EB einen größeren Durchmesser aufweist als die Bohrung 43. Die Schraube 5 ist dabei in einen in das Gehäuse 1 gebohrten Kanal einschraubbar, und von einer zweiten Gehäusewand 14 her zugänglich. Vorteilhaft kann in dieser Ausgestaltung durch das Lösen der Schraube 5 die Befestigung zwischen Sensoreinheit 3 und Gehäuse 1 sehr einfach wiederholt gelöst werden, wobei ein ggf. unbeabsichtigtes Entnehmen der Schraube 5 aus der Bohrung 43 mittels der zweiten Verliersicherung verhindert wird.

Um eine derartige Schraube 5 erstmalig in die Bohrung 43 einschrauben zu können, ist es vorteilhaft, ist vorteilhaft ein Federelement vorgesehen, welches beim Einschrauben der Schraube 5 in die Bohrung 43 eine Anpassung des Durchmesser des Endbereichs EB der Schraube und des Durchmessers der Bohrung aneinander bewirkt.

In Fig. 2b ist hierzu eine erste Variante dargestellt, in der die Bohrung 43 beim Einschrauben der Schraube 5 auffedert. Hierzu ist ein Schlitz 7 in den zweiten Klemmwinkelabschnitt 42 eingebracht. In der perspektivischen Ansicht in Fig. 2b ist zudem auch die an die Krümmung der Sensoreinheit angepasste Kontur 41a dargestellt. Diese in ihrer Form angepasste Kontur 41a ist selbstverständlich auch mit den nachfolgend geschilderten Ausgestaltungen kombinierbar. Die in ihrer Form angepasste Kontur 41a erreicht, dass der festgeschraubte Klemmwinkelabschnitt 4 mit mehreren Bereichen der Kontur 41a auf den Klemmbereich 31 presst. Dadurch wird vorteilhaft eine Mehrpunkt-Befestigung zwischen Sensoreinheit 3 und Gehäuse 1 erreicht.

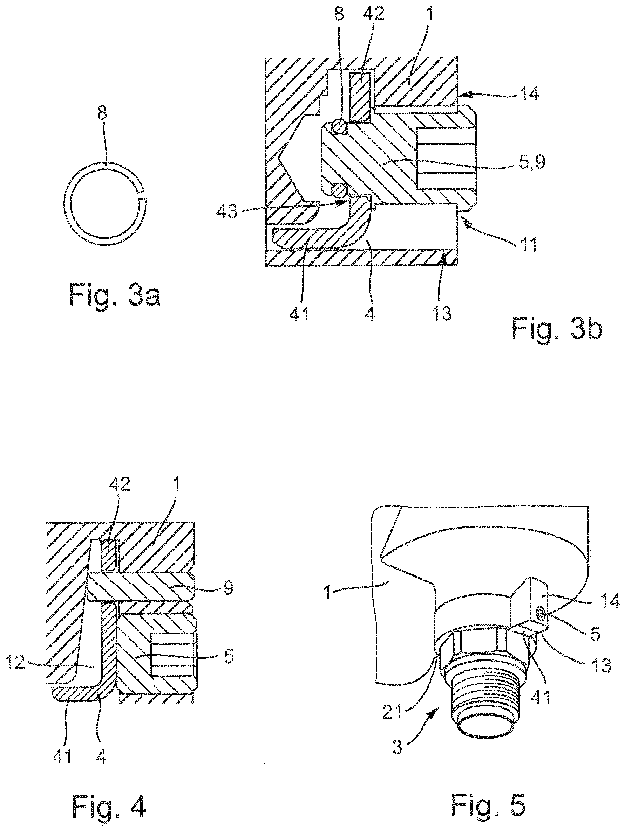

Eine zu Fig. 2a,b alternative oder gegebenenfalls zusätzliche Lösung des oben erwähnten Federelements zur Anpassung der Durchmesser von Schraube 5 und Bohrung 43 ist in Fig. 3a,b dargestellt. Der in Fig. 3a in einer Aufsicht gezeigte geschlitzte Ring 8 bewirkt zunächst, dass der Durchmesser im Endbereich EB der Schraube größer als der der Bohrung 43 ist. Dies ist in der Schnittansicht aus Fig. 3b deutlich erkennbar. Beim erstmaligen Einschrauben der Schraube 5 in den Kanal 11 wird der geschlitzte Ring 8 derart zusammengefedert, so dass sich der Durchmesser des Rings entsprechend verkleinert und dadurch die Bohrung 43 durchstoßen kann. Um dies zu vereinfachen, ist es gegebenenfalls möglich, die Bohrung 43 in einem dem Kanal 11 bzw. der zweiten Gehäusewand 14 zugewandten Bereich zusätzlich abzuschrägen.

Alternativ zu der in den Fig. 2a,b und Fig. 3a,b dargestellten ersten Verliersicherung für den Klemmwinkel 4, bei dem das stiftförmige Element 9 durch die Schraube 5 gebildet ist, ist es selbstverständlich alternativ auch möglich, eine zur Schraube 5 separates, zusätzliches stiftförmiges Element 9 vorzusehen. Dies ist in Fig. 4 dargestellt. In diesem Fall ragt die Schraube 5 nicht durch den zweiten Klemmwinkelabschnitt 42 hindurch, sondern verschiebt den Klemmwinkel 4 in der zur Sensoreinheit 3 radialen Richtung, indem sie auf den zweiten Klemmwinkelabschnitt 42 presst.

In Fig. 5 ist schließlich eine perspektivische Ansicht einer Ausgestaltung eines erfindungsgemäßen Feldgeräts dargestellt. In diesem Fall ist deutlich, dass der zur Verfügung stehende Platz für eine Befestigung sehr klein ist, insbesondere da ein Dichtring (hier nicht dargestellt) in einem an die Öffnung 21 angrenzenden Bereich zwischen dem Gehäuse 1 und der Sensoreinheit 3 angeordnet ist. Die Sensoreinheit 3 ist in Fig. 5 nur teilweise dargestellt, da beispielsweise entsprechende weitere zusätzliche Komponenten der Sensoreinheit 3 auf das der der Öffnung 21 abgewandte und aus dem Gehäuse 1 heraus ragende Gewinde der Sensoreinheit 3 geschraubt werden. Das Gehäuse 1 ist in dem markierten Bereich gewölbt, und kann in diesem Bereich entsprechend die Aussparung 12 im Gehäuse 1 zur Aufnahme des Klemmwinkels 4 aufweisen. Erkennbar ist in dieser perspektivischen Ansicht der frontbündig zur ersten Gehäusewand 13 angeordnete erste Klemmwinkelabschnitt 41 des Klemmwinkels 4 und die von der zweiten Gehäusewand 14 her zugängliche Schraube 5.

### Bezugszeichen und Symbole

- 1: Gehäuse
- 2: Führung
- 21: endseitige Öffnung der Führung
- 3: Sensoreinheit
- 31: Klemmbereich der Sensoreinheit
- 4: Klemmwinkel
- 41: erster Klemmwinkelabschnitt
- 41a: Kontur des ersten Klemmwinkelabschnitts
- 42: zweiter Klemmwinkelabschnitt
- 43: Bohrung im zweiten Klemmwinkelabschnitt
- 5: Schraube
- 6: Dichtelement
- 7: Schlitz
- 8: geschlitzter Ring
- 9: stiftförmiges Element
- 11: Kanal
- 12: Aussparung
- 13: erste Gehäusewand
- 14: zweite Gehäusewand

- EB: Endbereich

## Patentansprüche

1. Feldgerät der Automatisierungstechnik mit einem Gehäuse (1) und einer für eine Prozessgröße eines Mediums sensitiven Sensoreinheit (3),
aufweisend eine kanalförmige Führung (2) zur Aufnahme der Sensoreinheit (3) des Feldgeräts,
wobei die Sensoreinheit (3) durch eine endseitige Öffnung (21) der Führung (2) aus dem Gehäuse (1) heraus ragt,
wobei in einem an die Öffnung (21) der Führung (2) angrenzenden Bereich des Gehäuses (1) ein Klemmwinkel (4) und eine Schraube (5) in das Gehäuse (1) eingebracht sind,
wobei mittels der Schraube (5) der Klemmwinkel (4) im Gehäuse (1) um einen vorgebbaren Versatz in Richtung der Sensoreinheit (3) verschiebbar ist,
und wobei der in Richtung der Sensoreinheit (3) verschobene Klemmwinkel (4) dazu ausgestaltet ist, mit einem ersten Klemmwinkelabschnitt (41) des Klemmwinkels (4) im Wesentlichen radial auf einen im Gehäuse (1) angeordneten und der Öffnung (21) der Führung (2) zugewandten Klemmbereich (31) der Sensoreinheit (3) zu pressen,
wobei der Klemmwinkel (4) in eine Aussparung (12) des Gehäuses (1) eingesetzt ist und eine ein Herausnehmen und/oder ein Herausfallen des Klemmwinkels (4) aus der Aussparung (12) verhindernde erste Verliersicherung dadurch gebildet ist, dass in einen zu dem ersten Klemmwinkelabschnitt (41) im Wesentlichen senkrechten, zweiten Klemmwinkelabschnitt (42) ein stiftförmiges Element (9) eingesetzt ist, welches durch den zweiten Klemmwinkelabschnitt (42) hindurch ragt und welches mit dem Gehäuse (1) derart zusammenwirkt, dass der Klemmwinkel (4) mit dem darin eingesetzten stiftförmigen Element (9) nicht mehr dem Gehäuse (1) entnehmbar ist.

2. Feldgerät nach Anspruch 1,
wobei die Sensoreinheit (3) in das Gehäuse (1) eingeschraubt oder eingesteckt ist,
und wobei der auf die Sensoreinheit (3) pressende, erste Klemmwinkelabschnitt (41) eine Verdrehung der in das Gehäuse (1) eingeschraubten oder eingesteckten Sensoreinheit (3) gegenüber dem Gehäuse (1) verhindert.

3. Feldgerät nach zumindest einem der Ansprüche 1 oder 2,
wobei der erste Klemmwinkelabschnitt (41) im Wesentlichen parallel, insbesondere frontbündig, zu einer an die Öffnung (21) der Führung (2) angrenzenden ersten Gehäusewand (13) angeordnet ist,
und wobei der erste Klemmwinkelabschnitt (41) mit einer Kontur (41a) des ersten Klemmwinkelabschnitts (41) auf den Klemmbereich (31) der Sensoreinheit (3) presst.

4. Feldgerät nach Anspruch 3,
wobei die Form der Kontur des ersten Klemmwinkelabschnitts (41) an die Form des Klemmbereichs (31) der Sensoreinheit (3) angepasst ist.

5. Feldgerät nach zumindest einem der Ansprüche 1 bis 4,
wobei in einem an die Öffnung (21) der Führung (2) angrenzenden Bereich ein Dichtelement (6) zwischen Sensoreinheit (3) und Gehäuses (1) angeordnet ist, das dazu ausgestaltet ist, die Sensoreinheit (3) gegenüber dem Gehäuse (1) abzudichten,
und wobei der Klemmbereich (31) zwischen dem Dichtelement (6) und einem aus der Öffnung (21) der Führung (2) heraus ragenden Bereich der Sensoreinheit (3) angeordnet ist.

6. Feldgerät nach Anspruch 1,
wobei das stiftförmige Element (9) der ersten Verliersicherung durch die Schraube (5) gebildet ist, die durch eine in den zweiten Klemmwinkelabschnitt (42) eingebrachte Bohrung (43) hindurch ragt.

7. Feldgerät nach Anspruch 6,
wobei eine ein Herausnehmen und/oder ein Herausfallen der Schraube (5) aus dem Klemmwinkel (4) verhindernde zweite Verliersicherung dadurch gebildet ist,
dass die Schraube (5) an einem durch die Bohrung (43) des zweiten Klemmwinkelabschnitts (42) hindurch ragenden Endbereich (EB) einen größeren Durchmesser als die Bohrung (43) aufweist.

8. Feldgerät nach Anspruch 7,
wobei in den zweiten Klemmwinkelabschnitt (42) ein Schlitz (7) eingebracht ist,
und wobei die Schraube (5) dadurch in die Bohrung (43) des zweiten Klemmwinkelabschnitts (42) einschraubbar ist, dass das Einschrauben der Schraube (5) mittels des Schlitzes (7) ein Auffedern der Bohrung (43) bewirkt.

9. Feldgerät nach Anspruch 7 oder 8,
wobei der größere Durchmesser der Schraube (5) in dem Endbereich (EB) durch einen auf die Schraube (5) aufgesetzten und geschlitzten Ring (8) bestimmt wird,
und wobei die Schraube (5) dadurch in die Bohrung (43) des zweiten Klemmwinkelabschnitts (42) einschraubbar ist, dass das Einschrauben der Schraube (5) ein Zusammenfedern des geschlitzten Rings (8) bewirkt.

10. Feldgerät nach zumindest einem der Ansprüche 1 bis 9,
wobei die Schraube (5) von einer zu der ersten Gehäusewand (13) im Wesentlichen senkrechten zweiten Gehäusewand (14) her, die zu dem zweiten Klemmwinkelabschnitt (42) im Wesentlichen parallel ist, zugänglich ist,
und wobei
- das Zuschrauben der Schraube (5) das Verschieben des Klemmwinkels (4) um den vorgebbaren Versatz zu der Sensoreinheit (3) hin, und
- das Aufschrauben der Schraube (5) das Verschieben des Klemmwinkels (4) um den vorgebbaren Versatz von der Sensoreinheit (3) weg bewirkt.

11. Feldgerät nach zumindest einem der Ansprüche 1 bis 10,
wobei in das Gehäuse (1) ein Kanal (11), insbesondere im Wesentlichen radial zur Sensoreinheit (3), zur Aufnahme der Schraube (5) gebohrt ist.

12. Feldgerät nach zumindest einem der Ansprüche 1 bis 11,
wobei die Aussparung (12) zur Aufnahme des Klemmwinkel (4) bei der Fertigung des Gehäuses (1), insbesondere in einem Urformen, hergestellt ist.

13. Feldgerät nach zumindest einem der Ansprüche 1 bis 12,
wobei die Schraube (5) und/oder der Klemmwinkel (4) aus einem Edelstahl gefertigt ist/sind.

14. Feldgerät nach zumindest einem der Ansprüche 1 bis 13,
wobei die Schraube (5) einen Durchmesser von 1mm bis 10 mm, insbesondere von 2mm bis 6mm aufweist.

15. Feldgerät nach zumindest einem der Ansprüche 1 bis 14,
wobei der erste Klemmwinkelabschnitt (41) eine kleinere Fläche als der zweite Klemmwinkelabschnitt (42) aufweist,
und wobei der zweite Klemmwinkelabschnitt (42) insbesondere eine Fläche 10mm² bis 200 mm² aufweist.

## Claims

1. Field device used in automation engineering with a housing (1) and a sensor unit (3) that is sensitive to a process variable of a medium,
having a channel-shaped guide (2) designed to receive the sensor unit (3) of the field device
wherein the sensor unit (3) projects out of the housing (1) through an opening (21) at the end of the guide (2),
wherein a clamping bracket (4) and a screw (5) are introduced into the housing (1) in an area of the housing (1) that is adjacent to the opening (21) of the guide (2),
wherein the clamping bracket (4) can be moved in the housing (1), by means of the screw (5), by a predefinable offset in the direction of the sensor unit (3),
and wherein the clamping bracket (4) moved in the direction of the sensor unit (3) is designed to press with a first clamping bracket section (41) of the clamping bracket (4), in an essentially radial manner, on a clamping area (31) of the sensor unit (3) which is arranged in the housing (1) and faces towards the opening (21) of the guide (2), wherein the clamping bracket (4) is inserted in a recess (12) of the housing (1) and a first retainer preventing the clamping bracket (4) from being removed and/or from falling out of the recess (12) is formed in such a way that a pin-shaped element (9) is inserted into a second clamping bracket section (42), which is essentially perpendicular to the first clamping bracket section (41), wherein said element projects through the second clamping bracket section (42) and interacts with the housing (1) in such a way that the clamping bracket (4) with the inserted pin-shaped element (9) can no longer be removed from the housing (1).

2. Field device as claimed in Claim 1,
wherein the sensor unit (3) is screwed into or inserted into the housing (1),
and wherein the first clamping bracket section (41) that presses onto the sensor unit (3), prevents the sensor unit (3) that is screwed into or inserted into the housing (1) from turning in relation to the housing (1).

3. Field device as claimed in at least one of the Claims 1 or 2,
wherein the first clamping bracket section (41) is essentially parallel to, particularly flush at the front with, a first housing wall (13) that is adjacent to the opening (21) of the guide (2), and wherein the first clamping bracket section (41) presses onto the clamping area (31) of the sensor unit (3) with a contour (41a) of the first clamping bracket section (41).

4. Field device as claimed in Claim 3,
wherein the shape of the contour of the first clamping bracket section (41) is adapted to the shape of the clamping area (31) of the sensor unit (3).

5. Field device as claimed in at least one of the Claims 1 to 4,
wherein a sealing element (6) is arranged between the sensor unit (3) and the housing (1) in an area adjacent to the opening (21) of the guide (2), wherein said sealing element is designed to seal the sensor unit (3) in relation to the housing (1),
and wherein the clamping area (31) is arranged between the sealing element (6) and an area of the sensor unit (3) that projects out of the opening (21) of the guide (2).

6. Field device as claimed in Claim 1,
wherein the pin-shaped element (9) of the first retainer is formed by the screw (5) that projects through a bore (43) in the second clamping bracket section (42).

7. Field device as claimed in Claim 6,
wherein a second retainer preventing the screw (5) from being removed and/or from falling out of the clamping bracket (4) is formed in that the screw (5) has a diameter that is larger than the bore (43) at an end section (EB) projecting through the bore (43) of the second clamping bracket section (42).

8. Field device as claimed in Claim 7,
wherein a slot (7) is introduced in the second clamping bracket section (42),
and wherein the screw (5) can be screwed into the bore (43) of the second clamping bracket section (42) and in that, by means of the slot (7), the screwing in of the screw (5) causes an elastic expansion of the bore (43).

9. Field device as claimed in Claim 7 or 8,
wherein the larger diameter of the screw (5) in the end section (EB) is determined by a slotted ring (8) mounted on the screw (5),
and wherein the screw (5) can be screwed into the bore (43) of the second clamping bracket section (42) in such a way that the screwing in of the screw (5) causes an elastic compression of the slotted ring (8).

10. Field device as claimed in at least one of the Claims 1 to 9,
wherein the screw (5) can be accessed from a second housing wall (14), which is essentially perpendicular to the first housing wall (13) and is essentially parallel to the second clamping bracket section (42),
and wherein
- the screwing down of the screw (5) causes the clamping bracket (4) to move towards the sensor unit (3) by the predefinable offset, and
- the unscrewing of the screw (5) causes the clamping bracket (4) to move away from the sensor unit (3) by the predefinable offset.

11. Field device as claimed in at least one of the Claims 1 to 10,
wherein a channel (11) is bored into the housing (1), particularly in an essentially radial manner in relation to the sensor unit (3), in order to receive the screw (5).

12. Field device as claimed in at least one of the Claims 1 to 11,
wherein the recess (12) designed to receive the clamping bracket (4) is produced during the fabrication of the housing (1), particularly during primary shaping.

13. Field device as claimed in at least one of the Claims 1 to 12,
wherein the screw (5) and/or the clamping bracket (4) is/are made of stainless steel.

14. Field device as claimed in at least one of the Claims 1 to 13,
wherein the screw (5) has a diameter of 1 mm to 10 mm, particularly 2 mm to 6 mm.

15. Field device as claimed in at least one of the Claims 1 to 14,
wherein the first clamping bracket section (41) has a surface that is smaller than the second clamping bracket section (42),
and wherein the second clamping bracket section (42) particularly has a surface of 10 mm² to 200 mm².

## Revendications

1. Appareil de terrain de la technique d'automatisation avec un boîtier (1) et une unité de capteur (3) sensible à une grandeur process d'un produit,
lequel boîtier présente un guide (2) en forme de canal destiné à recevoir l'unité de capteur (3) de l'appareil de terrain
l'unité de capteur (3) dépassant du boîtier (1) par une ouverture (21) frontale du guide (2),
une équerre de serrage (4) et une vis (5) étant introduits dans le boîtier (1), dans une zone du boîtier (1) adjacente à l'ouverture (21) du guide (2),
l'équerre de serrage (4) pouvant être déplacée dans le boîtier, au moyen de la vis (5), selon un décalage prédéfinissable en direction de l'unité de capteur (3),
et l'équerre de serrage (4) déplacée en direction de l'unité de capteur (3) étant conçue pour presser avec un premier côté (41) de l'équerre de serrage (4) pour l'essentiel radialement sur une zone de serrage (31) de l'unité de capteur (3) disposée dans le boîtier (1) et tournée vers l'ouverture (21) du guide (2),
l'équerre de serrage (4) étant insérée dans un évidement (12) du boîtier (1) et un premier dispositif antiperte empêchant l'équerre de serrage (4) d'être retirée et/ou de tomber de l'évidement (12) étant formé en ce qu'un élément en forme de goupille (9) est inséré dans un deuxième côté (42) de l'équerre de serrage (4), qui est pour l'essentiel perpendiculaire au premier côté (41) de l'équerre de serrage (4), lequel élément fait saillie à travers le deuxième côté (42) de l'équerre de serrage (4) et qui interagit avec le boîtier (1) de telle sorte que l'équerre de serrage (4) avec l'élément en forme de goupille (9) inséré dans celle-ci ne peut plus être retirée du boîtier (1).

2. Appareil de terrain selon la revendication 1,
pour lequel l'unité de capteur (3) est vissée ou enfichée dans le boîtier (1),
et pour lequel le premier côté (41) de l'équerre de serrage (4), lequel premier côté vient presser sur l'unité de capteur (3), empêche l'unité de capteur (3) vissée ou enfichée dans le boîtier (1) de tourner par rapport au boîtier (1).

3. Appareil de terrain selon au moins l'une des revendications 1 ou 2,
pour lequel le premier côté (41) de l'équerre de serrage (4) est disposé pour l'essentiel parallèlement, notamment en affleurement, avec une première paroi de boîtier (13) adjacente à l'ouverture (21) du guide (2),
et pour lequel le premier côté (41) de l'équerre de serrage (4) vient presser avec un contour (41a) du premier côté (41) de l'équerre de serrage (4) sur la zone de serrage (31) de l'unité de capteur (3).

4. Appareil de terrain selon la revendication 3,
pour lequel la forme du contour du premier côté (41) de l'équerre de serrage (4) est adaptée à la forme de la zone de serrage (31) de l'unité de capteur (3).

5. Appareil de terrain selon au moins l'une des revendications 1 à 4,
pour lequel un élément d'étanchéité (6) est disposé entre l'unité de capteur (3) et le boîtier (1) dans une zone adjacente à l'ouverture (21) du guide (2), lequel élément d'étanchéité est conçu pour rendre étanche l'unité de capteur (3) par rapport au boîtier (1),
et pour lequel la zone de serrage (31) est disposée entre l'élément d'étanchéité (6) et une zone de l'unité de capteur (3) faisant saillie hors de l'ouverture (21) du guide (2).

6. Appareil de terrain selon la revendication 1,
pour lequel l'élément en forme de goupille (9) du premier dispositif antiperte est formé par la vis (5) faisant saillie à travers un alésage (43) réalisé dans le deuxième côté (42) de l'équerre de serrage (4).

7. Appareil de terrain selon la revendication 6,
pour lequel un deuxième dispositif antiperte empêchant la vis (5) d'être retirée et/ou de tomber de l'équerre de serrage (4) est formé en ce que la vis (5) présente un diamètre plus grand que l'alésage (43) au niveau d'une zone d'extrémité (EB) faisant saillie à travers l'alésage (43) du deuxième côté (42) de l'équerre de serrage (4).

8. Appareil de terrain selon la revendication 7,
pour lequel une fente (7) est réalisée dans le deuxième côté (42) de l'équerre de serrage (4),
et pour lequel la vis (5) peut être vissée dans l'alésage (43) du deuxième côté (42) de l'équerre de serrage (4) en ce que le vissage de la vis (5) provoque une détente élastique de l'alésage (43) par le biais de la fente (7).

9. Appareil de terrain selon la revendication 7 ou 8,
pour lequel le plus grand diamètre de la vis (5) dans la zone d'extrémité (EB) est déterminé par une bague fendue (8) montée sur la vis (5),
et pour lequel la vis (5) peut être vissée dans l'alésage (43) du deuxième côté (42) de l'équerre de serrage (4), en ce que le vissage de la vis (5) provoque une compression élastique de la bague fendue (8).

10. Appareil de terrain selon au moins l'une des revendications 1 à 9,
pour lequel la vis (5) est accessible depuis une deuxième paroi de boîtier (14), laquelle deuxième paroi est pour l'essentiel perpendiculaire à la première paroi de boîtier (13) et pour l'essentiel parallèle au deuxième côté (42) de l'équerre de serrage (4),
et pour lequel
- le vissage de la vis (5) provoque le rapprochement de l'équerre de serrage (4) selon un décalage prédéfinissable par rapport à l'unité de capteur (3), et
- le dévissage de la vis (5) provoque l'éloignement de l'équerre de serrage (4) selon un décalage prédéfinissable par rapport à l'unité de capteur (3).

11. Appareil de terrain selon au moins l'une des revendications 1 à 10,
pour lequel un canal (11) est percé dans le boîtier (1), notamment pour l'essentiel radialement par rapport à l'unité de capteur (3), lequel canal est destiné à recevoir la vis (5).

12. Appareil de terrain selon au moins l'une des revendications 1 à 11,
pour lequel l'évidement (12) destiné à recevoir l'équerre de serrage (4) est réalisé lors de la fabrication du boîtier (1), notamment dans une étape de traitement initiale.

13. Appareil de terrain selon au moins l'une des revendications 1 à 12,
pour lequel la vis (5) et/ou l'équerre de serrage (4) est/sont en acier inoxydable.

14. Appareil de terrain selon au moins l'une des revendications 1 à 13,
pour lequel la vis (5) présente un diamètre de 1 mm à 10 mm, notamment de 2 mm à 6 mm.

15. Appareil de terrain selon au moins l'une des revendications 1 à 14,
pour lequel le premier côté (41) de l'équerre de serrage (4) présente une surface plus petite que le deuxième côté (42) de l'équerre de serrage (4),
et pour lequel le deuxième côté (42) de l'équerre de serrage (4) présente notamment une surface de 10 mm² à 200 mm².
